# EUROPÄISCHE PATENTANMELDUNG

(11) **EP 4 741 326 A1**
(43) Veröffentlichungstag der Anmeldung: **13.05.2026**
(21) Anmeldenummer: 25209117.8
(22) Anmeldetag: 16.10.2025
(51) Int. Cl.: B65G 69/00

(54) **VORSCHUBLADEBRÜCKE FÜR EINE THERMISCH ISOLIERTE VERLADESTELLE, DAMIT VERSEHENE VERLADESTELLENAUSRÜSTUNG UND VERLADESTELLE**

(30) Priorität: 12.11.2024 DE 102024133112; 05.12.2024 DE 102024136381; 18.12.2024 DE 102024138616
(71) Anmelder: Hörmann Alkmaar BV, 1822 BB Alkmaar (NL)
(72) Erfinder: Stroet, Franciscus Johannes, 1704 WL Heerhugowaard (NL); Koopman, Arie Pieter Cornelis, 1771 RW Wieringerwerf (NL)
(74) Vertreter: KASTEL Patentanwälte PartG mbB

(57) **Zusammenfassung**

Die Erfindung betrifft insbesondere eine Vorschubladebrücke (10) für eine Verladestelle (12), umfassend eine Basis (16), eine an der Basis (16) bewegbar gelagerte Plattform (18), eine an der Plattform (18) verschiebbare Vorschublippe (20) und eine Dichtungsvorrichtung (22), die dazu ausgebildet ist, einen unteren Bereich (24) unterhalb der Plattform (18) gegenüber einer Außenumgebung abzudichten. Um die Energieeinsparung wesentlich zu verbessern, wird vorgeschlagen, dass die Dichtungsvorrichtung (22) eine längliche elastisch komprimierbare Kissenstruktur (26) mit einem Balg (30) und einer beispielsweise einen in dem Balg (30) angeordneten elastisch verformbaren Körper (32) aufweisenden Aufspanneinrichtung (31) zum Aufspannen des Balgs (30) sowie eine Saugeinrichtung (34) aufweist, die dazu ausgebildet ist, durch Absaugen von Fluid aus dem Balg (30) die Kissenstruktur (26) zu komprimieren.

## Beschreibung

Die Erfindung betrifft eine Vorschubladebrücke, insbesondere für eine thermisch isolierte Verladestelle an einem Gebäude. Weiter betrifft die Erfindung eine Ladestellenausrüstung für eine solche Verladestelle, umfassend eine solche Vorschubladebrücke sowie ein thermisch isoliertes Außentor. Weiter betrifft die Erfindung eine mit einer solchen Vorschubladebrücke oder Verladestellenausrüstung versehene Verladestelle eines Gebäudes.

Zum technologischen Hintergrund und zur Begriffsklärung wird auf folgende Literaturstelle verwiesen, die derzeit auf dem Markt erhältliche Ladebrücken sowie Verladestellenausrüstungen beschreibt:

| | |
|---|---|
| [1] | "VERLADETECHNIK", Firmenbroschüre der Hörmann KG Verkaufsgesellschaft, mit dem Druckvermerk "Stand 12.2023 / Druck 12.2023 / HF 86278 DE / SAP 368783 / G.XX / Gedruckt auf 100 % Recyclingpapier", heruntergeladen am 22.10.2024 unter https://www.hoermann.de/mediacenter/download/205067de/Verladetechni k.pdf?20241031123237 |

Industriegebäuden, wie Hallen für Handel und Industrie, sind oft mit Verladestellen zum Andocken mit Transportbehältern, wie Lastkraftwagen, Sattelaufliegern und Anhängern, Wechselbrücken oder Containern, versehen. Einige dieser Gebäude sind temperiert, beispielsweise sind die Gebäude für eine Industrieproduktion innen auf Zimmertemperatur geheizt oder klimatisiert oder es handelt sich um Lagergebäude zur temperierten Lagerung, wie z.B. Kühlhäuser für gekühlte oder tiefgekühlte Waren. Derartige Gebäude brauchen einen nicht unerheblichen Energieaufwand zur Temperierung. Wie in [1] beschrieben, bieten abgestimmte energieeffiziente Lösungen an der Verladestelle ein enormes Energiesparpotenzial. Bei innenliegenden Lösungen gilt es, Wärmeverluste über die Stahlkonstruktion der Ladebrücken wirkungsvoll zu reduzieren. Isolation unterhalb der Ladebrücke und vor der Ladebrücke laufende Tore sind bei temperierten Hallen gegenwärtig zur Energieeinsparung Stand der Technik. Bei Vorsatzschleusen wird die gesamte Verladestelle vor die Halle gesetzt. Ein wärmegedämmtes Außentor bildet außerhalb der Verladezeiten einen optimalen Hallenabschluss.

Beim Andocken des Fahrzeugs/Behälters an die Verladestelle entsteht noch oben und zur Seite hin ein Freiraum zwischen dem andockenden Transportbehälter (z.B. Fahrzeug, Wechselbrücke, Container) und dem Gebäude, der durch z.B. aus [1] gut bekannte Torabdichtungen in bewährter Weise energiesparend abgedichtet werden kann.

Derartige Verladestellen weisen meist Ladebrücken auf, deren Endbereich auf die Endkante des Transportbehälters aufgelegt werden können und somit ein Beladen/Entladen desselben auch mit Flurförderfahrzeugen ermöglichen. Die Ladebrücken sind beispielsweise als Vorschubladebrücken (siehe [1], teleskopische Ladebrücken) ausgebildet und weisen eine Plattform auf, die zur Anpassung an unterschiedliche Höhen des angedockten Transportbehälters nach oben und unten bewegbar ist. Daher muss auch unterhalb der Plattform ein Freiraum vorgesehen sein.

Es sind im Stand der Technik bereits erhebliche Anstrengungen unternommen worden, um bei Verladestellen für temperierte Gebäude thermische Wärmeverluste über die Ladebrücke auch nach unten hin zu vermeiden. Lediglich beispielhaft wird hierzu auf folgende Literaturstellen verwiesen:

| | |
|---|---|
| [2] | DE 199 06 486 C1 |
| [3] | US 4 422 199 A1 |
| [4] | US 7 334 281 B2 |
| [5] | US 8 800 086 B1 |
| [6] | US 2004/0 205 913 A1 |
| [7] | US 2008/0 052 843 A1 |
| [8] | WO 2022/108443 A1 |
| [9] | WO 2024/177501 A1 |

Einige der darin vorgeschlagenen Lösungen sind für Vorschubladebrücken schwierig, nur mit hohem Aufwand oder Einschränkung der Ladebrückenfunktion umzusetzen, andere bieten nur ein geringes Energieeinsparpotential.

Die Erfindung hat sich zur Aufgabe gestellt, eine Vorschubladebrücke, insbesondere für eine Verladestelle an einem temperierten Gebäude, zur Verfügung zu stellen, mit der in langlebiger und zuverlässiger Weise Energie eingespart werden kann, ohne die Ladebrückenfunktion zu beeinträchtigen.

Zum Lösen dieser Aufgabe schafft die Erfindung eine Vorschubladebrücke nach Anspruch 1. Eine Ladestellenausrüstung sowie eine Verladestelle mit eine solchen Vorschubladebrücke sind Gegenstand der Nebenansprüche.

Vorteilhafte Ausgestaltungen sind Gegenstand der Unteransprüche.

Die Erfindung schafft gemäß einem ersten Aspekt davon eine Vorschubladebrücke für eine Verladestelle, umfassend eine Basis, eine an der Basis bewegbar gelagerte Plattform, eine an der Plattform verschiebbare Vorschublippe und eine Dichtungsvorrichtung, die dazu ausgebildet ist, einen unteren Bereich unterhalb der Plattform gegenüber einer Außenumgebung abzudichten, dadurch gekennzeichnet,
dass die Dichtungsvorrichtung eine längliche elastisch komprimierbare Kissenstruktur mit einem Balg und einer Aufspanneinrichtung zum Aufspannen des Balgs sowie eine Saugeinrichtung aufweist, die dazu ausgebildet ist, durch Absaugen von Fluid aus dem Balg die Kissenstruktur zu komprimieren.

Unter Fluid wird dabei jedes fließfähige Medium, also insbesondere ein Gas oder eine Flüssigkeit verstanden. Beispielsweise ist das Fluid Luft; es kann aber auch ein anderes Gas oder eine Flüssigkeit sein oder enthalten.

Die Aufspanneinrichtung ist dazu ausgebildet, die Kissenstruktur und insbesondere den Balg in Ruhestellung, d.h. insbesondere ohne Energiezufuhr, aufzuspannen. Bei einigen Ausführungsformen weist die Aufspanneinrichtung einen in dem Balg angeordneten elastisch verformbaren Körper auf. Beispielsweise ist in dem Balg ein Schaumstoffkern vorgesehen. Auch andere elastisch verformbare Kerne oder Federn sind möglich. Bei anderen Ausführungsformen ist der Balg selbst elastisch derart ausgebildet, dass er sich in Ruhestellung ausdehnt und aus der ausgedehnten Stellung durch Absaugen von Fluids aus dem Balg komprimieren lässt. Beispielsweise ist der Balg aus einer gummielastischen Haut gebildet. Auch Kombinationen der vorgenannten Mittel sind möglich.

Die Verwendung einer solchen Dichtungsvorrichtung zum Abdichten des Freiraums unterhalb eine Vorschubladebrücke hat einige wesentliche Vorteile. Zum einen ist die Kissenstruktur im Ruhezustand, also ohne Energiezufuhr, expandiert und dichtet somit, ohne dass Energie zugeführt werden muss, ab (im Gegensatz zu aufblasbaren Dichtungen).

Zum Bewegen von Teilen der Vorschubladebrücke, wie insbesondere der Vorschublippe, kann die Kissenstruktur durch Aktivieren der Saugeinrichtung komprimiert werden. Die Dichtungsvorrichtung nimmt dann weniger Raum ein, so dass die Vorschubladebrücke bewegt werden kann, ohne dass die Dichtungsvorrichtung an relativ zu ihr bewegten Teilen reibt. Somit können Beschädigungen vermieden werden, und die Dichtungsvorrichtung ist sehr zuverlässig und langlebig.

Durch einen im Inneren des Balgs angeordneten elastischen Körper - beispielsweise Schaumkörper wie z.B. aus PU-Schaum - wird die thermische Isolierwirkung der Dichtung gegenüber bisherigen Lösungen stark erhöht.

Der durch die Dichtungsvorrichtung abzudichtende Öffnungsbereich unterhalb der Ladebrücke ist im Gegensatz zu dem möglichen Freiraum, der oben und seitlich zwischen den unterschiedlich dimensionierten Transportbehältern entstehen kann und durch Torabdichtungen abzudichten ist, relativ klein und vorbestimmt definiert, so dass die Dichtungsvorrichtung optimal dimensioniert werden kann. Es reicht auch eine geringe Komprimierung aus, da die Bewegungen der Ladebrücke in einem engen vordefinierten Bereich stattfinden. Die Kräfte, die die Saugeinrichtung aufwenden muss, sind daher relativ gering. Es können auch relativ steife elastische Körper mit sehr guter thermischer Isolierwirkung eingesetzt werden. Somit kann die Dichtungsvorrichtung sehr wirtschaftlich und kostengünstig hergestellt und betrieben werden.

Bei einigen Ausführungsformen ist vorgesehen, dass die Dichtungsvorrichtung an einer Unterseite der Vorschublippe befestigt ist. Dies hat gegenüber einer stationär befestigten Dichtungsvorrichtung den besonderen Vorteil, dass die Dichtungsvorrichtung zusammen mit der Vorschublippe zum Ladebetrieb in Richtung Außenumgebung vorgeschoben wird und dort in der vorgeschobenen Lage abdichten kann. Im Bereich vor der Ladebrücke befindet sich oft ein engerer unterer Öffnungsbereich der Ladestelle, die durch Anschläge für das andockende Fahrzeug begrenzt wird. Bei besonders bevorzugten Ausgestaltungen lässt sich die Dichtungsvorrichtung im zunächst komprimierten Zustand durch die Bewegung der Vorschublippe in diesen engeren unteren Öffnungsbereich hinein fahren und wird dann wieder in den Ruhezustand versetzt, wo sie durch die elastischen Kräfte des Körpers expandiert wird und den engeren unteren Bereich so weit wie möglich ausfüllen und somit gut abdichten kann.

Bei einigen Ausführungsformen ist vorgesehen, dass die Dichtungsvorrichtung ein in Expansionsrichtung offenes Gehäuse oder eine U-förmige Profilleiste als Halterung hat, in dem bzw. in der die Kissenstruktur angeordnet ist.

Bei einigen Ausführungsformen ist vorgesehen, dass der elastischen Körper als Schaumkörper ausgebildet ist. Bei einigen Ausführungsformen ist vorgesehen, dass der elastische Körper den Balg vollständig ausfüllt. Bei einigen Ausführungsformen ist vorgesehen, dass in dem Balg zusätzlich zu elastischen Elementen oder Körpern der Aufspanneinrichtung Hohlräume zur Aufnahme bestimmter Formen und/oder zur Manipulation des elastischen Elements oder Körpers vorgesehen sind. So ist es beispielsweise möglich, der Kissenstruktur ein vorbestimmtes Kompressionsverhalten vorzugeben.

Beispielsweise lassen sich durch das Vorsehen von Hohlräumen verschiedene Härtegrade in dem elastischen Körper oder in dem Kissen erzeugen. Im Bereich der Hohlräume wird der Härtegrad geringer. Auch lassen sich durch Vorsehen von Versteifungen in dem elastischen Körper, beispielsweise durch Integration von vorbestimmten steiferen Formelementen wie Einsätzen aus steiferem elastischen oder auch inelastischen Materialien die Härtegrade des elastischen Körpers in vorbestimmten Bereichen vergrößern. Somit kann das Kompressionsverhalten beeinflusst werden.

Bei einigen Ausführungsformen ist vorgesehen, dass der Balg im Wesentlichen gasdicht ausgebildet ist.

Bei einigen Ausführungsformen ist vorgesehen, dass der Balg bei inaktiver Saugeinrichtung durch den elastischen Körper prall gehalten ist.

Die Vorschubladebrücke weist vorzugsweise einen Ladebrückenantrieb zum Antreiben der Bewegungen der Plattform und der Vorschublippe und eine Ladebrückensteuerung zum Steuern des Ladebrückenantriebs auf. In vorteilhafter Weise ist vorgesehen, dass die Saugeinrichtung in Abhängigkeit von der Steuerung des Ladebrückenantriebs gesteuert ist. Dies kann auf unterschiedliche Weise geschehen. Die Saugeinrichtung kann z.B. ein Sauggebläse aufweisen, das synchron oder zeitversetzt zu dem Ladebrückenantrieb angesteuert wird. Die Ladebrückensteuerung kann auch zum Steuern der Saugeinrichtung ausgebildet sein. Die Saugeinrichtung kann eine eigene Steuerung aufweisen, die die Steuerung in Abhängigkeit von der Ladebrückensteuerung durchführt.

Bei einigen Ausführungsformen ist vorgesehen, dass die Ladebrückensteuerung dazu ausgebildet ist, die Saugeinrichtung zum Komprimieren der Kissenstruktur in Abhängigkeit von einer Bewegung der Ladebrücke zu aktivieren.

Bei einigen Ausführungsformen ist vorgesehen, dass die Ladebrückensteuerung dazu ausgebildet ist, die Saugeinrichtung zum Komprimieren der Kissenstruktur während jeder Bewegung der Ladebrücke aktiv zu halten.

Bei einigen Ausführungsformen ist vorgesehen, dass die Ladebrückensteuerung dazu ausgebildet ist, die Saugeinrichtung vor Bewegung der Ladebrücke zu aktivieren und nach Beendigung der Bewegung der Vorschublippe zu deaktivieren.

Bei einigen Ausführungsformen ist vorgesehen, dass die Ladebrückensteuerung dazu ausgebildet ist, die Saugeinrichtung in Abhängigkeit von einer Bewegung der Vorschublippe zu aktivieren.

Bei einigen Ausführungsformen ist vorgesehen, dass die Ladebrückensteuerung dazu ausgebildet ist, die Saugeinrichtung während jeder Bewegung der Vorschublippe aktiv zu halten.

Bei einigen Ausführungsformen ist vorgesehen, dass die Ladebrückensteuerung dazu ausgebildet ist, die Saugeinrichtung vor Bewegung der Vorschublippe zu aktivieren und nach Beendigung der Bewegung der Vorschublippe zu deaktivieren.

Bei besonders bevorzugten Ausgestaltungen ist vorgesehen, dass die Saugeinrichtung an den Ladebrückenantrieb derart angeschlossen ist, dass die Saugeinrichtung synchron oder zeitversetzt zusammen mit dem Ladebrückenantrieb eingeschaltet und/oder ausgeschaltet wird.

Bei einigen Ausführungsformen ist vorgesehen, dass die Kissenstruktur und die Saugeinrichtung Teil eines vollständig oder im Wesentlichen geschlossenen Systemvolumens sind. Insbesondere ist ein Fluidreservoir vorgesehen, in welches das aus der Kissenstruktur gesaugte Fluid beim Komprimieren eingeleitet wird und aus dem das Fluid beim Aufspannen wieder in die Kissenstruktur geleitet wird. Bei einigen Ausführungsformen ist hierzu beispielsweise ein Auslass eines Sauggebläses mit einem Ballon oder Beutel verschlossen. Beim Evakuieren der Kissenstruktur wird der Ballon oder Beutel gefüllt, wird das Sauggebläse ausgeschaltet, fährt die Kissenstruktur aufgrund der Aufspanneinrichtung wieder in die expandierte oder aufgespannte Ruhestellung aus und zieht dabei das Fluid wieder aus dem Ballon oder Beutel heraus. Dieser Vorgang kann durch eine Elastizität des Ballons/Beutels unterstützt werden.

Ein Vorteil der vorgenannten Ausführung ist, dass die Dichtungsvorrichtung ein möglichst weit geschlossenes Fluidsystem aufweist und somit für schmutzige Orte besser geeignet ist. Fremdmaterie wie Sand oder Staub wird am Eindringen in die Kissenstruktur gehindert. Verunreinigungen können möglichst weitgehend ferngehalten werden.

Bei besonders bevorzugten Ausgestaltungen ist vorgesehen, dass eine Energieversorgung der Saugeinrichtung mit einer Energieversorgung des Ladebrückenantriebs derart gekoppelt ist, dass die Saugeinrichtung nur dann mit Energie versorgt wird, wenn der Ladebrückenantrieb a) mit Energie versorgt wird, b) läuft oder c) in Betriebsbereitschaft ist.

Beispielsweise weist der Ladebrückenantrieb einen Elektromotor, z.B. einen Elektromotor einer Hydraulikpumpe auf. Die Saugeinrichtung weist bei einigen Ausführungsformen ein elektrisch angetriebenes Gebläse auf. Das elektrisch angetriebene Gebläse ist bei einigen Ausführungsformen an eine Spannungsversorgung für den Elektromotor des Ladebrückenantriebs angeschlossen. Wird somit der Elektromotor des Ladebrückenantriebs in Gang gesetzt, wird auch das Gebläse in Gang gesetzt, so dass die Kissenstruktur bei jeder durch den Ladebrückenantrieb angetriebenen Bewegung komprimiert wird.

Gemäß einem weiteren Aspekt schafft die Erfindung eine Ladestellenausrüstung für eine Verladestelle an einem Gebäude, umfassend eine Vorschubladebrücke nach einer der voranstehenden Ausgestaltungen und ein wärmegedämmtes Außentor zum Verschließen der Verladestelle, wobei das Außentor einen thermisch gedämmten Torflügel und eine Torführung zum Führen des Torflügels aufweist.

Bei einigen Ausführungsformen ist vorgesehen, dass die Torführung zur Anordnung vor der im Gebäude im Ruhezustand zurückliegenden Ladebrücke ausgebildet ist.

Bei einigen Ausführungsformen ist vorgesehen, dass die Torführung zur Anordnung oberhalb der Ladebrücke, so dass im bestimmungsgemäßen Gebrauch der Torflügel im geschlossenen Zustand auf der im Ruhezustand befindlichen Ladebrücke aufliegt, ausgebildet ist.

Bei einigen Ausführungsformen weist die Ladestellenausrüstung ein Isolationspaneel zur thermischen Isolierung einer Unterseite der Verladestelle auf.

Bei einigen Ausführungsformen weist die Ladestellenausrüstung eine Torabdichtung zum Abdichten eines seitlichen und oberen Freiraums zwischen dem Gebäude und einem an der Verladestelle andockenden Transportbehälter (dies kann z.B. ein LKW, Anhänger, Auflieger, Container oder eine Wechselbrücke sein) auf.

Gemäß einem weiteren Aspekt schafft die Erfindung eine Verladestelle für ein Gebäude, wobei die Verladestelle eine Vorschubladebrücke oder eine Verladestellenausrüstung nach einer der voranstehenden Ausgestaltungen aufweist.

Gemäß einem weiteren Aspekt schafft die Erfindung ein Gebäude, z.B. temperierte Halle für Gewerbe, Lagerung oder Industrieproduktion, mit einer Verladestelle, wobei die Verladestelle eine Vorschubladebrücke oder eine Verladestellenausrüstung nach einer der voranstehenden Ausgestaltungen aufweist.

Bei einigen Ausführungsformen der Verladestelle oder des Gebäudes ist die Verladestelle mit einer Laderampe mit einer gegenüber einem Boden des Innenraums des Gebäudes abgesenkten Bereich versehen, in dem die Ladebrücke angeordnet ist.

Bei einigen Ausführungsformen der Verladestelle oder des Gebäudes ist der Torflügel im geschlossenen Zustand vor der im Gebäude zurückversetzten Ladebrücke angeordnet. Hierdurch wird die Verladestelle im Nichtgebrauch thermisch gut isoliert verschlossen. Allerdings entsteht im Ladebetrieb bei geöffnetem Tor durch die seitlich über die Breite der Ladebrücke vorstehende Aussparung für den Torflügel ein Luftkanal, durch den auch bei Abdichtung des oberen und seitlichen Freiraums durch eine Torabdichtung oder dergleichen Luft von außen in das Gebäude gelangen kann. Mit der insbesondere an der vorgeschobenen Vorschublippe angreifenden oder daran angebrachten Dichtungsvorrichtung kann der untere Öffnungsbereich vor der Basis der Ladebrücke abgedichtet werden und somit auch der Austausch von Luft im Ladebetrieb stark vermindert werden.

Bei einigen Ausführungsformen der Verladestelle oder des Gebäudes liegt der Torflügel im geschlossenen Zustand auf der Ladebrücke auf. Bei diesen Ausführungsformen kann mit der Dichtungsvorrichtung auch im Ruhezustand der unterhalb der Ladebrücke ausgebildete Freiraum abgedichtet werden. Die Dichtungsvorrichtung kann leicht nachgerüstet werden oder bei Ersetzen der Ladebrücke zusammen mit der neuen Ladebrücke vorgesehen werden. Somit können auch solche Ladestellen, wo der Torflügel im Schließzustand auf der Ladebrücke aufliegt, ohne größere Umbauten des Gebäudes gut abgedichtet werden.

Bei einigen Ausführungsformen der Verladestelle oder des Gebäudes ist vorgesehen, dass das Isolationspaneel den abgesenkten Bereich der Laderampe nach unten thermisch isoliert und derart angeordnet und ausgebildet ist, dass der Torflügel im geschlossenen Zustand auf dem Isolationspaneel aufliegt und dass im Ladebetrieb die Kissenstruktur der Dichtungsvorrichtung auf dem Isolationspaneel aufliegt.

Bei einigen Ausführungsformen der Verladestelle oder des Gebäudes ist vorgesehen, dass die Verladestelle einen oberhalb der Ladebrücke im Ruhezustand angeordneten oberen Öffnungsbereich und einen unteren Öffnungsbereich aufweist, durch den die ausgefahrene Ladebrücke auch im abgesenkten Zustand hindurchreichen kann, wobei der untere Öffnungsbereich seitlich durch Anschläge für den andockenden Transportbehälter begrenzt und dadurch enger als der obere Bereich ist, wobei die Dichtungsvorrichtung dazu ausgebildet ist, im expandierten Zustand den unteren Öffnungsbereich unterhalb der Ladebrücke abzudichten.

Vorteilhafte Ausgestaltungen betreffen eine Dichtungsvorrichtung zum Abdichten eines Öffnungsbereiches einer Verladestelle unterhalb einer Ladebrücke, wobei die Dichtungsvorrichtung ein durch Evakuieren komprimierbares Kissen aufweist (Vakuum-Abdichtung).

Einige Ausführungsformen der Dichtungsvorrichtung und der damit versehenen Ladebrücke sind für einen Fall vorgesehen, bei dem ein z.B. als Sektionaltor ausgebildetes Außentor vor der teleskopischen Laderampe die Gebäudeschließung bildet, speziell wo das Tor bis auf die Unterseite der Laderampe lauft (und nicht unbedingt auf die Fahrbahn). Denn dadurch entsteht (bei geöffnetem Tor) eine Lücke neben der Laderampe, durch die eine Luftverbindung nach draußen besteht, die durch die bestehenden Dichtungsvorrichtungen zum Abdichten des unteren Bereichs unter einer Ladebrücke, insbesondere Vorschubladebrücke, verhindert werden kann.

Bei bevorzugten Ausgestaltungen wird die Dichtungsvorrichtung nach Ausfahren der Vorschublippe expandiert und dichtet den unteren Öffnungsbereich vor der Basis der Ladebrücke ab. Besonders bevorzugt ist die Dichtungsvorrichtung an der Unterseite der Vorschublippe befestigt und lässt sich so durch Vorschub der Lippe (und Ausschalten der Saugvorrichtung) in die vordere Dichtstellung bringen.

Bei anderen Ausgestaltungen schließt das Außentor, beispielsweise Sektionaltor oben auf der Ladebrücke schließen. Dann verbleibt auch im Schließzustand des Tores unterhalb der Ladebrücke ein Öffnungsbereich, der in vorteilhafterweise sowohl in der Ruhestellung der Ladebrücke als auch im Ladebetrieb durch die Dichtungsvorrichtung abgedichtet werden kann.

Bei einigen Ausführungsforme erfolgt ein Ein- und Ausschalten der Saugeinrichtung gleichzeitig (oder zeitversetzt mit einem Motor der Ladebrücke; dies spart eine separate Steuerung.

Die Dichtungsvorrichtung mit Balg und dem diesen aufspannenden elastische verformbaren Körper hat zusätzlich zu einer Abdichtung gegen Zugluft eine sehr gute wärmedämmende Funktion.

Gemäß einem weiteren Aspekt schafft die Erfindung eine Verwendung einer Dichtungsvorrichtung an einer Vorschubladebrücke für eine Verladestelle, die eine Basis, eine an der Basis bewegbar gelagerte Plattform und eine an der Plattform verschiebbare Vorschublippe umfasst, zum Abdichten eines unteren Bereichs unterhalb der Plattform gegenüber einer Außenumgebung, wobei die Dichtungsvorrichtung eine längliche elastisch komprimierbare Kissenstruktur mit einem Balg und einer Aufspanneinrichtung zum Aufspannen des Balgs sowie eine Saugeinrichtung aufweist, die dazu ausgebildet ist, durch Absaugen von Fluid aus dem Balg die Kissenstruktur zu komprimieren.

Sämtliche oben und in den Unteransprüchen angegebenen optionale Merkmale von vorteilhaften Ausgestaltungen der Ladebrücke, der Verladestelle oder des Gebäudes können auch einzeln oder in beliebiger Kombination bei der Verwendung vorgesehen sein.

Die Dichtungsvorrichtung kann beispielsweise zusammen mit einer Ladebrücke zur Verladestelle geliefert und dort montiert werden. Einige Ausführungsformen der Dichtungsvorrichtung sind einzeln, insbesondere als Nachrüstlösung, herstellbar und nachträglich montierbar. Die Dichtungsvorrichtung kann als loses Produkt auch nachträglich an bereits existierenden Laderampen installiert werden. So kann beispielsweise bei einer nachträglichen energetischen Gebäudesanierung auch eine daran vorgesehene Verladestelle besser isoliert werden.

Ausführungsbeispiele der Erfindung werden im Folgenden anhand der beigefügten Zeichnungen näher erläutert. Darin zeigt:
- Fig. 1: eine perspektivische Ansicht einer Vorschubladebrücke mit einer Dichtungsvorrichtung an einer Verladestelle eines Gebäudes im Verlauf einer Ausfahrbewegung;
- Fig. 2: eine teils geschnittene Seitenansicht durch die Vorschubladebrücke zu Beginn der Ausfahrbewegung;
- Fig. 3: eine Vorderansicht der Vorschubladebrücke zu Beginn der Ausfahrbewegung;
- Fig. 4: die Vorderansicht der Vorschubladebrücke im Verlauf der Ausfahrbewegung in einer Position vergleichbar zu der von Fig. 1;
- Fig. 5: die Vorderansicht der Vorschubladebrücke am Ende der Ausfahrbewegung;
- Fig. 6: eine Seitenansicht der Vorschubladebrücke bei angedocktem Transportbehälter am Ende der Ausfahrbewegung, wo eine Vorschublippe auf einen hinteren Kantenbereich des Transportbehälters aufgesetzt wird und die Dichtungsvorrichtung expandiert;
- Fig. 7: eine Vorderansicht einer Verladestelle des Gebäudes, die mit einer Ladestellenausrüstung gemäß einer Ausführungsform versehen ist, welche die Vorschubladebrücke und ein thermisch isoliertes Außentor aufweist, wobei die Ladestellenausrüstung in der Ruhestellung mit geschlossenem Außentor gezeigt ist;
- Fig. 8: eine teils geschnittene Seitenansicht der Verladestelle von Fig. 7 in der Ruhestellung;
- Fig. 9: eine Ansicht wie in Fig. 7, wobei die Ladestellenausrüstung in einer Ladebetriebsstellung mit ausgefahrener Vorschubladebrücke und geöffnetem Außentor gezeigt ist;
- Fig. 10: eine teils geschnittene Seitenansicht der Verladestelle von Fig. 9 in der Ladebetriebsstellung;
- Fig. 11: eine Vorderansicht einer weiteren Ausführungsform der Verladestelle des Gebäudes, die mit einer Ladestellenausrüstung gemäß einer weiteren Ausführungsform versehen ist, welche die Vorschubladebrücke und ein thermisch isoliertes Außentor aufweist, wobei die Ladestellenausrüstung in der Ruhestellung mit geschlossenem Außentor gezeigt ist;
- Fig. 12: eine teils geschnittene Seitenansicht der Verladestelle von Fig. 11 in der Ruhestellung;
- Fig. 13: eine Ansicht wie in Fig. 11, wobei die Ladestellenausrüstung gemäß der weiteren Ausführungsform in einer Ladebetriebsstellung mit ausgefahrener Vorschubladebrücke und geöffnetem Außentor gezeigt ist;
- Fig. 14: eine teils geschnittene Seitenansicht der Verladestelle von Fig. 13 in der Ladebetriebsstellung;
- Fig. 15: eine schematische Vorderansicht auf eine weitere Ausgestaltung der Vorschubladebrücke mit einer zweiten Ausführungsform der Dichtungsvorrichtung, wobei eine Kissenstruktur derselben gerade expandiert;
- Fig. 16: eine Ansicht wie in Fig. 15, wobei die Vorschubladebrücke mit vollständig expandierter Kissenstruktur in der Ruhestellung gezeigt ist;
- Fig. 17: eine schematische Vorderansicht auf eine weitere Ausgestaltung der Vorschubladebrücke mit einer dritten Ausführungsform der Dichtungsvorrichtung, wobei eine Kissenstruktur derselben gerade expandiert;
- Fig. 18: die schematische Vorderansicht auf die weitere Ausgestaltung der Vorschubladebrücke von Fig. 17, wobei die Vorschubladebrücke mit vollständig expandierter Kissenstruktur in der Ruhestellung gezeigt ist;
- Fig. 19: eine teils geschnittene Seitenansicht durch die Vorschubladebrücke gemäß einer weiteren Ausgestaltung zu Beginn der Ausfahrbewegung, wobei eine vierte Ausführungsform der Dichtungsvorrichtung gezeigt ist, die sich durch ein im Wesentlichen geschlossenes Fluidvolumen auszeichnet;
- Fig. 20: eine Seitenansicht auf eine Kissenstruktur der Dichtungsvorrichtung gemäß einer fünften Ausführungsform im Ruhezustand;
- Fig. 21: die Kissenstruktur von Fig. 20 bei einem Kompressionsvorgang;
- Fig. 22: eine Seitenansicht auf eine Kissenstruktur der Dichtungsvorrichtung gemäß einer sechsten Ausführungsform im Ruhezustand;
- Fig. 23: die Kissenstruktur von Fig. 22 bei einem Kompressionsvorgang;
- Fig. 24: eine Seitenansicht auf eine Kissenstruktur der Dichtungsvorrichtung gemäß einer siebten Ausführungsform im Ruhezustand; und
- Fig. 25: die Kissenstruktur von Fig. 24 bei einem Kompressionsvorgang.

In den Figuren sind einige Ausführungsformen einer Vorschubladebrücke 10 für eine Verladestelle 12 an einem temperierten Gebäude 14 (z.B. Lagerhalle, Produktionshalle, Kühlhalle) dargestellt. Die Vorschubladebrücke 10 weist eine Basis 16, eine an der Basis 16 bewegbar gelagerte Plattform 18, eine an der Plattform 18 verschiebbare gehaltene Vorschublippe 20 und eine Dichtungsvorrichtung 22 auf, die dazu ausgebildet ist, einen unteren Bereich 24 der Verladestelle 12 unterhalb der Plattform 18 gegenüber einer Außenumgebung abzudichten.

Die Dichtungsvorrichtung 22 weist eine längliche elastisch komprimierbare Kissenstruktur 26 und eine Halterung 28 auf. Die Kissenstruktur 26 weist einen als einen Balg 30 und eine Aufspanneinrichtung 31 zum Aufspannen des Balgs 30 in einer Ruhestellung.

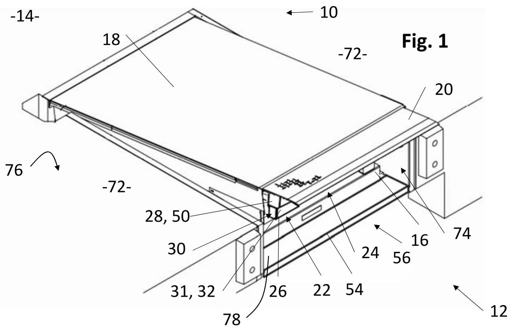

Bei einigen Ausführungsformen, von denen Beispiele in den Figuren 1 bis 18 sowie 22 bis 25 gezeigt sind, weist die Aufspanneinrichtung 31 einen Elastikkern 90 auf. Bei den in den Fig. 1 bis 18 dargestellten Ausführungsbeispielen weist die Aufspanneinrichtung und insbesondere der Elastikkern 90 einen in dem Balg 30 angeordneten elastisch verformbaren Körper 32 auf, der so ausgebildet ist, dass er im Ruhezustand so voluminös ist, dass er den Balg 30 mit seinen elastischen Kräften in expandierter Stellung aufspannt. Insbesondere ist der Balg 30 durch den Elastikkern 90, insbesondere den Körper 32 in dessen Ruhestellung prall gefüllt. Der Körper 32 ist bei einigen Ausführungsformen ein elastischer Schaumkörper aus einem aufgeschäumten Kunststoff, wie z.B. aus einem PU-Schaum.

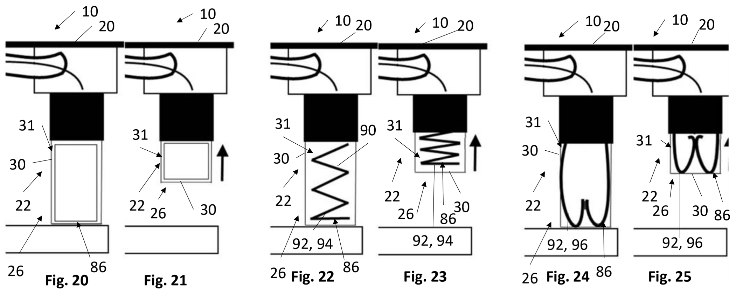

Bei einigen Ausführungsformen, von denen Beispiele in den Figuren 20 bis 25 dargestellt sind, weist die Aufspanneinrichtung 31 anstelle oder auch in nicht dargestellten Ausführungsbeispielen zusätzlich zu dem Körper 32 Mittel 86 zum elastischen Aufspannen des Balgs 30 auf.

Der Balg 30 weist eine im Wesentlichen gasdichte Hülle oder Haut z.B. aus verformbarer Kunststoffplane (nach Art einer LKW-Plane, eventuell mit Gewebeverstärkung) auf.

Die Fig. 20 bis 25 zeigen einige Alternativen eines elastischen Kerns 90, mit Federn oder einem federnden Äußeren.

Bei einigen Ausführungsformen, von denen eine Beispiel in Fig. 20 und 21 dargestellt ist, ist die Hülle des Balgs 30 als gummielastische Haut 88 ausgebildet, so dass die Hülle selbst als Mittel 86 zum elastischen Aufspannen des Balgs in der Ruhestellung dient.

Bei einigen Ausführungsformen, von denen Beispiele in Fig. 22 bis 25 dargestellt sind, weist der Elastikkern 90 als Mittel 86 zum elastischen Aufspannen wenigstens eines oder mehrere Federelemente 92 auf. Die Federelemente 92 können zum Beispiel wie in Fig. 22 und 23 gezeigt, Schraubenfedern 94 und/oder wie in Fig. 24 und 25 gezeigt, Blattfedern 96 umfassen. Die Federelemente 92 oder ein Teil derselben können auch in der Hülle integriert oder als Teil der Hülle ausgebildet sein.

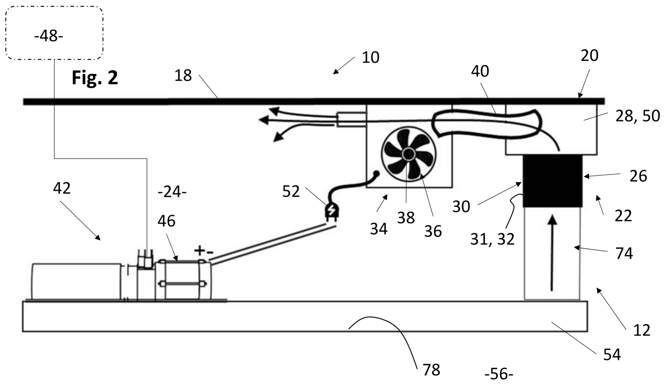

Weiter weist die Dichtungsvorrichtung 22, wie insbesondere aus Fig. 2, 4, 5 und 19 ersichtlich, eine Saugeinrichtung 34 auf, die dazu ausgebildet ist, durch Absaugen von Fluid (wie insbesondere Luft) aus dem Balg 30 die Kissenstruktur 26 zu komprimieren. Bei einigen Ausführungsformen weist die Saugeinrichtung 34 ein Sauggebläse 36 mit einem elektrischen Gebläsemotor 38 auf, das mit dem Balg 30 zum Evakuieren desselben verbunden ist. Bei einigen Ausführungsformen ist das Sauggebläse 36 stationär an der Verladestelle 12 befestigt oder wie dargestellt an der Unterseite der Plattform 18 befestigt. In einem solchen Fall ist die Saugeinrichtung 34 mit einer flexiblen Rohrleitung, beispielsweise mit einem flexiblen Schlauch 40 an das Innere der Kissenstruktur 26 angeschlossen. Bei einigen nicht dargestellten Ausführungen ist die Saugeinrichtung 34 in oder an der Halterung der Kissenstruktur 26 untergebracht und unmittelbar oder über ein starres Rohr mit deren Inneren in Fluidverbindung.

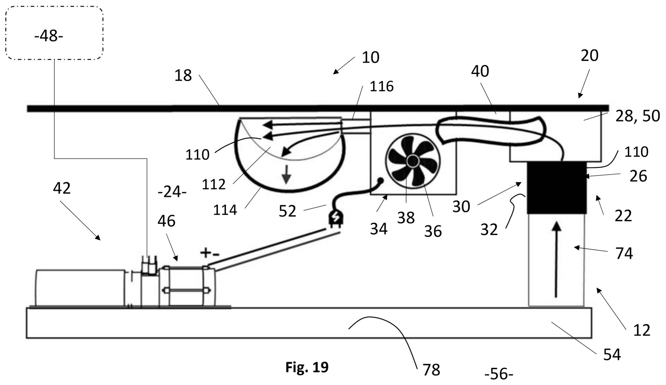

Fig. 19 zeigt ein Beispiel einer geschlossenen Variante der Dichtungsvorrichtung 22. Bei einigen Ausführungsformen, von denen ein Beispiel in Fig. 19 dargestellt ist, sind somit der Balg 30 und die Saugeinrichtung 34 Teil eines gemeinsamen geschlossenen Fluidvolumens 110. Beispielsweise weist hierzu die Dichtungsvorrichtung 22 ein Fluidreservoir 112 zur Aufnahme von aus der Kissenstruktur 26 beim Komprimieren gesaugtem Fluid und zur Wiederzuführung des Fluids beim Expandieren der Kissenstruktur 26 in den Balg 30 auf. Das Fluidreservoir 112 kann je nach verwendetem Fluid und je nach Platzverhältnissen ganz unterschiedlich ausgebildet sein. Bei dem dargestellten Ausführungsbeispiel wird das Fluidreservoir 112 oder zumindest ein Teil desselben durch einen Ballon 114, einen Sack oder eine Tüte gebildet, der bzw. die an einem Auslass 116 der Saugeinrichtung 34 angeschlossen ist. Beim Komprimieren wird der Ballon 114 bzw. der Sack/die Tüte durch das Sauggebläse 34 mit dem Fluid, z.B. Luft, aus der Kissenstruktur 26 gefüllt. Wird die Saugeinrichtung 34 abgestellt, expandiert der Balg 30 aufgrund der elastischen Kraft der Aufspanneinrichtung 31 wieder, wobei das Fluid wieder aus dem Ballon 114 bzw. der Tüte entnommen wird.

Wenngleich die Dichtungsvorrichtung 22 bei einigen Ausführungsformen auch stationär an der Verladestelle 12 unterhalb der Ruhestellung der Vorschublippe 20 angeordnet und befestigt sein kann, ist die Dichtungsvorrichtung 22 bei den dargestellten Ausführungsformen an der Unterseite der Vorschublippe 20 befestigt und somit mit der Vorschublippe 20 mitbewegbar.

Die Halterung 28 weist bei den dargestellten Ausführungsformen ein in Expansionsrichtung, hier nach unten gerichtet, offenes Gehäuse 50 oder ein U-Profil auf. Das Gehäuse 50 oder das Profil ist aus einem steifen ausreichend widerstandsfähigem Material, wie insbesondere Metall, z.B. Stahl, oder einem festen Kunststoff ausgebildet. Der der Halterung 28 zugewandte Endbereich der Kissenstruktur 26 ist innerhalb der Halterung 28 angeordnet und somit gut geschützt. Bei Komprimierung der Kissenstruktur 26 wird ein weiterer Bereich derselben in der Halterung aufgenommen.

Die Vorschubladebrücke 10 weist in den dargestellten Ausführungsformen einen Ladebrückenantrieb 42 zum Anheben und Senken der Plattform 18 und zum Verschieben der Vorschublippe 20 auf. Der Ladebrückenantrieb 42 kann unterschiedlich ausgebildet sein, beispielsweise können elektrische, pneumatische oder hydraulische Aktoren für die Bewegung vorgesehen sein. Bei den dargestellten Ausführungen ist die Vorschubladebrücke 10 hydraulisch betätigt und weist als Aktoren Hydraulikzylinder 44 auf. Der Ladebrückenantrieb 42 weist einen elektrischen Ladebrückenmotor 46 auf, der hier in gut bekannter Weise eine Hydraulikpumpe 48 antreibt. Derartige Ladebrückenantriebe 42 sind dem Fachmann bekannt, auf dem Markt erhältlich und auch im Stand der Technik nach [1] gezeigt und werden hier nicht näher erläutert.

Weiter weist die Vorschubladebrücke 10 eine an sich ebenfalls, z.B. aus [1] bekannte und daher nur schematisch dargestellte Ladebrückensteuerung 48 auf, mit der die Bewegungen der Plattform 18 und der Vorschublippe 20 gesteuert werden.

Die Saugeinrichtung 34 ist in Abhängigkeit von der Steuerung des Ladebrückenantriebs 42 gesteuert. Bei einigen Ausführungsformen ist die Ladebrückensteuerung 48 dazu ausgebildet, die Saugeinrichtung 34 zum Komprimieren der Kissenstruktur 26 in Abhängigkeit von einer Bewegung der Vorschubladebrücke 10 zu aktivieren. Beispielsweise wird die Saugeinrichtung bei jeder Bewegung eines Teils der Vorschubladebrücke, wie insbesondere der Plattform 18 und ganz insbesondere der Vorschubladebrücke aktiviert, so dass eine Komprimierung der Kissenstruktur 26 und somit ein Einziehen der Dichtungsvorrichtung 22 bewirkt wird, wenn eine Bewegung erfolgt.

Dies kann durch entsprechende Verbindung der Ladebrückensteuerung 48 mit der Saugeinrichtung 34 selbst und entsprechender Programmierung erfolgen. In anderen Ausführungen ist die Ladebrückensteuerung 48 mit einer Steuerung der Saugeinrichtung 34 kommunikativ verbunden. Bei den besonders bevorzugten dargestellten Ausführungen ist der Spannungsanschluss 52 des Gebläsemotors 38 an den Ladebrückenmotor 46 oder dessen Spannungsversorgung angeschlossen, so dass er gleichzeitig oder zeitversetzt zu dem Ladebrückenmotor 46 mit Energie versorgt wird oder eingeschaltet und ausgeschaltet wird. Dadurch spart man sich eine eigene Steuerung vor die Dichtungsvorrichtung 22 und eine Anpassung der Ladebrückensteuerung 48.

In Fig. 1 ist die Vorschubladebrücke 10 perspektivisch mit angehobener Plattform 18 bei Ausfahren der Vorschublippe 20 dargestellt. Der Ladebrückenmotor 46 läuft und entsprechend läuft auch die Saugeinrichtung 34, so dass der Balg evakuiert ist und die Kissenstruktur komprimiert ist. Die Vorschublippe 20 kann mit eingezogener Dichtungsvorrichtung 22 ohne Gefahr, dass diese irgendwo reibt oder anstößt verfahren werden.

Fig. 2 zeigt schematisch den Anschluss der Saugvorrichtung 34 an den Ladebrückenantrieb 42 und das Komprimieren der Kissenstruktur zu Beginn der Ausfahrbewegung der Vorschubladebrücke 10.

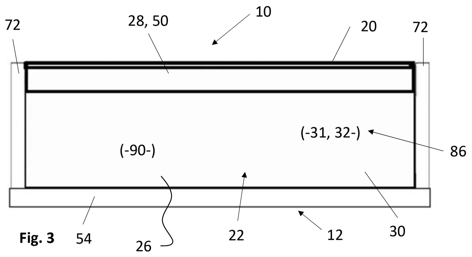

Fig. 3 zeigt die Vorschubladebrücke 10 vorn vorne in der Ruhestellung. Die Saugeinrichtung 34 ist inaktiv, die Kissenstruktur 26 ist vollständig expandiert und füllt den unteren Öffnungsbereich der Verladestelle unter der Vorschublippe 20 aus. Bei einigen Ausführungsformen ist der abzudichtende Freiraum unter der Plattform - unterer Bereich 24 - nach unten hin mit einem Isolierpaneel 54 thermisch isoliert. Beispielsweise ist das Isolierpaneel 54 an der als Gestell ausgeführten Basis befestigt. In der Ruhestellung liegt die Kissenstruktur 26 auf diesem Isolierpaneel 54 auf und dichtet gegen das Isolierpaneel 54 ab. Unterhalb des Isolierpaneels 54 und oberhalb des Fahrbahnniveaus ist bei einigen Ausführungsformen ein weiterer Freiraum 56 vorgesehen; hier kann beispielsweise eine als hinterer Abschluss vorgesehene Ladehebebühne beim Andocken des Lastkraftwagens einfahren.

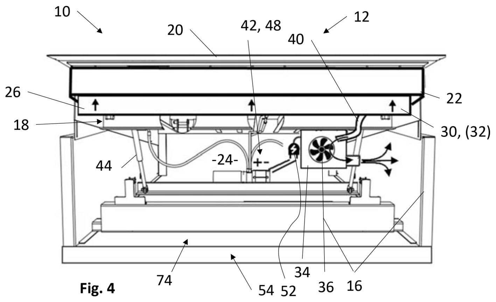

Fig. 4 zeigt die Vorschubladebrücke 10 von vorne beim Ausfahren der Vorschublippe 20 mit angehobener Plattform 18 und komprimierter Kissenstruktur 26.

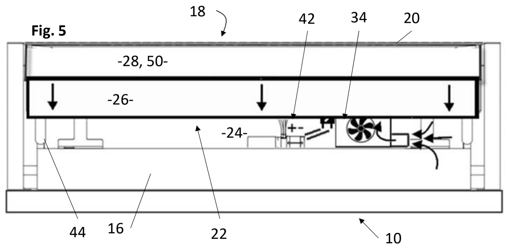

Fig. 5 zeigt die Vorschubladebrücke 10 am Ende deren Bewegung. Der Ladebrückenmotor 46 wird abgeschaltet, wodurch auch der Gebläsemotor 38 abgeschaltet wird. Der elastische Körper 32 expandiert wieder und spannt den Balg 30 auch ohne Betrieb des Gebläses 36 wieder auf, wobei Luft, z.B. über nicht dargestellte Rückschlagventile oder wie dargestellt über das Sauggebläsegehäuse und den Schlauch 40 zurück in den Balg 30 strömt. Bei einigen Ausführungsformen kann auch vorgesehen sein, dass das Sauggebläse 36 in dieser Phase für kurze Zeit rückwärts läuft, um das Expandieren zu unterstützen.

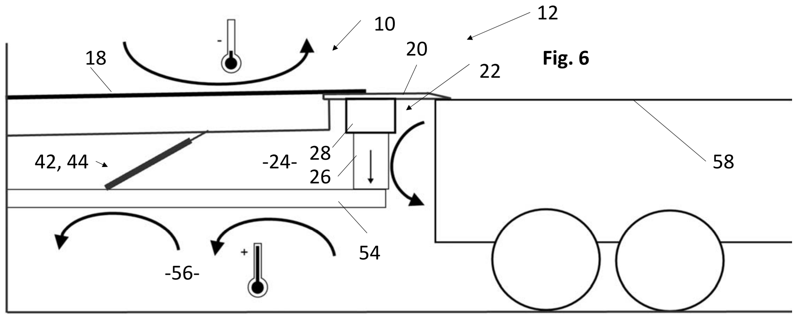

Fig. 6 zeigt eine Seitenansicht der Verladestelle 12 mit der Vorschubladebrücke 10 bei angedocktem Transportbehälter 58 - beispielsweise Laderaum eines Lastkraftwagens 60, eines Aufliegers oder Anhängers oder Container oder Wechselbrücke - in einer Ladebetriebsstellung. Die Vorschublippe 20 liegt auf dem hinteren Kantenbereich des Transportbehälters 58 auf. Die Plattform 18 befindet sich in der Schwimmstellung und kann so Auf- und Abbewegungen des Transportbehälters 58 beim Ladevorgang mitmachen. Die Dichtungsvorrichtung 22 befindet sich im expandierten Zustand und dichtet den unteren Bereich 24 zwischen dem Isolierpaneel 54 und der Plattform 18 ab. Die Saugeinrichtung 34 ist abgeschaltet und benötigt somit keine Energie. Die Schwimmbewegungen der Plattform 18 kann die Dichtungsvorrichtung aufgrund der Elastizität der Kissenstruktur 26 auffangen, so dass die Abdichtung erhalten bleibt. Bei dem dargestellten Beispiel ist das Gebäude 14 eine Kühlhalle für gekühlte oder tiefgekühlte Güter und der Transportbehälter 58 ein temperierter Kühlbehälter. Die tieferen Temperaturen oberhalb der Plattform werden durch die Vorschubladebrücke wirksam gegenüber warmen Außentemperaturen thermisch getrennt.

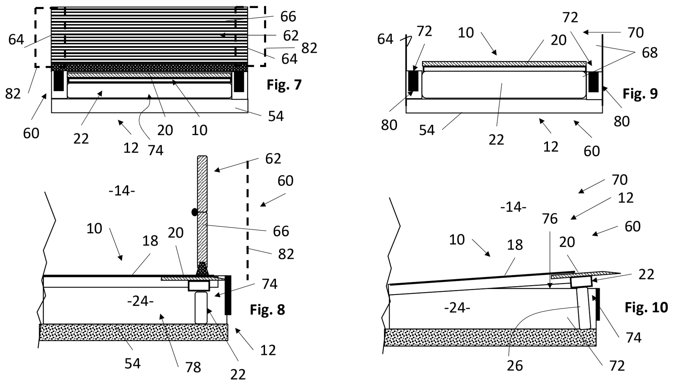

Die Fig. 7 bis 10 zeigen unterschiedliche Ansichten einer ersten Ausführungsform einer Ladestellenausrüstung 60 für die Verladestelle 12. Die Ladestellenausrüstung 60 weist die zuvor anhand der Fig. 1 bis 6 erläuterte Vorschubladebücke 10 und ein thermisch isoliertes Außentor 62, beispielsweise ausgebildet als Sektionaltor, mit einer Torführung 64 und einem thermisch isolierten Torflügel 66 auf. Fig. 7 zeigen die Ladestellenausrüstung 60 in Ruhestellung bei geschlossenem Außentor 62 und die Fig. 9 und 10 zeigen die Ladestellenausrüstung 60 in einer Ladebetriebsstellung ähnlich zu Fig. 6 bei geöffnetem Außentor 62. Der Torflügel 66 liegt hier im geschlossenen Zustand auf der Vorschubladebrücke 10 auf. Die Öffnung 68 der Verladestelle 12 weist einen breiteren oberen Öffnungsbereich 70 und einen durch seitliche Begrenzungen 72 neben der Vorschubladebrücke 10 begrenzten unteren Öffnungsbereich 74 auf. Die seitlichen Begrenzungen 72 begrenzen einen gegenüber dem Boden 76 des Innenraums des Gebäudes 14 abgesenkten Bereich 78, in dem die Vorschubladebrücke 10 vorzugsweise so untergebracht ist, dass die Oberfläche der sich in Ruhestellung befindlichen Plattform 18 bündig mit dem Boden 76 ist. In dem abgesenkten Bereich 78 ist so der Freiraum unterhalb der Plattform 18 - unterer Bereich 24 - für die Bewegung der Vorschubladebrücke 10 gebildet.

An den seitlichen Begrenzungen 72 sind nach außen hin Anschläge 80 (hier z.B. mit Anschlagpuffern 82 versehen) vorgesehen, die das Gebäude 14 und die Verladestelle 12 vor Schäden beim Andocken des Transportbehälters 58 schützen. Aufgrund dieser Begrenzungen 72 und Anschläge 80 ist der unter der Plattform 18 in deren Ruhestellung befindliche untere Öffnungsbereich 74 enger als der obere Öffnungsbereich 70. Während der obere Öffnungsbereich 70 in der in Fig. 7 und 8 gezeigten Ruhestellung gut durch das Außentor 62 verschlossen wird, wird in der Ruhestellung nun auch der untere Öffnungsbereich 74 durch die Dichtungsvorrichtung 22 verschlossen.

Im Ladebetrieb wird der obere Öffnungsbereich 70 durch den Transportbehälter 58 (siehe Fig, 6) und eine in Fig. 7 und 8 lediglich schematisch angedeutete, aber aus [1] in unterschiedlichen Ausführungen gut bekannte Torabdichtung 82 verschlossen. Aber auch im Ladebetrieb wird nun, wie in Fig. 9 und 10 gezeigt, der untere Öffnungsbereich 74 wirksam durch die Dichtungsvorrichtung 22 verschlossen.

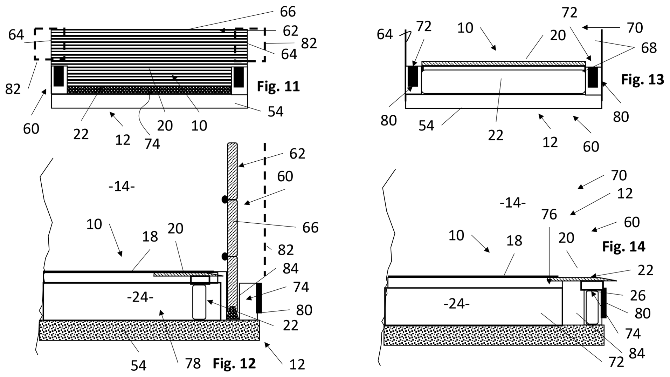

Die Fig. 11 bis 14 zeigen in entsprechenden Ansichten wie die Fig. 7 bis 10 eine weitere Ausführungsform der Verladestelle 12 mit einer weiteren Ausführungsform der Ladestellenausrüstung 60, die mit Ausnahme der im Folgenden erläuterten Unterschieden den Ausführungen der Figuren 7 bis 10 entsprechen.

Bei der Ausführung der Verladestelle 12 und der Ladestellenausrüstung 60 gemäß den Fig. 11 bis 14 ist die Vorschubladebrücke 10 weiter ins Innere des Gebäudes 14 versetzt. Der Torflügel 66 befindet sich im geschlossenen Zustand vor der Vorschubladebrücke 10 und schließt so im Ruhezustand die gesamte Öffnung der Verladestelle 12 gegenüber der Außenumgebung gut ab. Beispielsweise wird der Grund des abgesenkten Bereichs 78 durch das Isolierpaneel 54 gebildet oder zum unteren Bereich 24 hin isoliert, und die untere Tordichtung an dem Torflügel 66 liegt dichtend auf dem Isolierpaneel auf. Dadurch wird in der Ruhestellung eine sehr gute Abdichtung der Ladestellenöffnung erreicht, wie dies auch in [1] ausgeführt ist.

Um Platz für die nach unten bis zum Grund des abgesenkten Bereichs 78 reichende Torführung 64 und das untere Paneel des geschlossenen Torflügels 66 zu schaffen, weisen die seitlichen Begrenzungen 72 Schlitze 84 auf. Diese bildeten bisher Luftkanäle, durch die im Ladebetrieb ein Luftaustausch und somit thermische Energieverluste entstanden. Wie in den Fig. 13 und 14 dargestellt, lässt sich die Dichtungsvorrichtung 22 gemäß bevorzugter Ausführungsformen der Vorschubladebrücke 10 nun zusammen mit der Vorschublippe 20 im komprimierten Zustand vorfahren und dann einfach durch Deaktivieren der Saugeinrichtung 34 wieder ausfahren, wo sie dann den unteren Öffnungsbereich 74 im Bereich zwischen den Anschlägen 80 abdichtet.

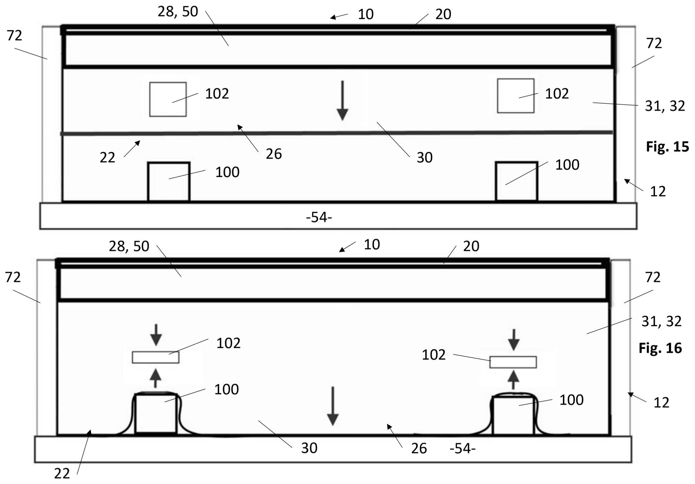

Je nach Ausgestaltungen der Verladestelle 12 oder der Ladestellenausrüstung 60 kann es sein, dass der Balg 30 der Dichtungsvorrichtung 22 kein ebenes Gegenlager zum Abdichten hat; es können beispielsweise Vorsprünge 100, wie z.B. Teil eines Rahmens oder seitliche Fasen unterhalb der Vorschubladebrücke 10 vorhanden sein, wie dies in den Ausführungsbeispielen der Fig. 15 bis 18 gezeigt ist. Einige Ausführungsformen der Kissenstruktur 26, von denen Beispiele in diesen Figuren gezeigt sind, weisen wenigstens einen Hohlraum 102 oder ein Formelement 104 auf, um das Kompressionsverhalten der Kissenstruktur 26, insbesondere eine komprimierte Form der Kissenstruktur 26, zu beeinflussen. Beispielsweise ist bei der in den Fig. 15 und 16 dargestellten Ausführung der elastische Körper 32 mit Hohlräumen 102 oberhalb der Vorsprünge 100 versehen.

Insbesondere zeigen die Figuren 15 und 16 eine Ausführung des elastischen Kerns 90 mit mehreren Löchern, um hohle Bereiche unterhalb der Vorschubladebrücke besser abzudichten. Dadurch können unterschiedliche Härtegrade erzeugt werden. Fährt die untere Kante des Balgs 30 auf die Vorsprünge 100 auf, dann kann sich das dadurch eingedrückte Material in den sich dann verkleinernden Hohlraum 102 hinein ausdehnen.

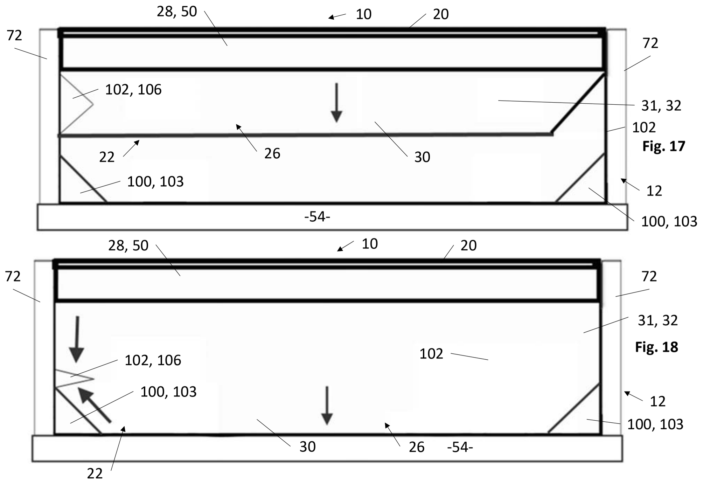

Die Fig. 17 und 18 zeigen ein Beispiel für eine spezielle Form 104 der Kissenstruktur 26, insbesondere des elastischen Kerns 90, 32, um bestimmte Formen - z.B. Fase 103 - des hohlen Bereichs unterhalb der Ladebrücke besser abzudichten, und für Einkerbungen 106, um den Schaumstoff zu manipulieren, damit er bestimmte Formen besser abdichtet. Bei den Fig. 17 und 18 sind seitliche keilförmige Strukturen - z.B. äußere Form 104 oder Einkerbungen 106 - gezeigt, die eine Anpassung des Balgs 30 an seitliche Fasen 103 ermöglichen.

Es sind unterschiedliche Ausführungen einer Dichtung zum Abdichten einer Ladebrücke 10 nach unten mit einer Aufspanneinrichtung (z.B. einem elastischen Körper) und einer Haut beschrieben worden, wobei ein Einfahren der Dichtung durch Absaugen erfolgt. Vorteilhaft ist, dass ein Laufen der Absaugvorrichtung nur dann nötig ist, wenn die Ladebrücke verfahren wird und dass die Dichtung durch den Körper eine verbesserte Dichtwirkung hat.

Für den Fachmann ist klar, dass die in den unterschiedlichen Ausführungsbeispielen gezeigten Merkmale beliebig miteinander kombinierbar sind.

Die Erfindung betrifft insbesondere eine Vorschubladebrücke (10) für eine Verladestelle (12), umfassend eine Basis (16), eine an der Basis (16) bewegbar gelagerte Plattform (18), eine an der Plattform (18) verschiebbare Vorschublippe (20) und eine Dichtungsvorrichtung (22), die dazu ausgebildet ist, einen unteren Bereich (24) unterhalb der Plattform (18) gegenüber einer Außenumgebung abzudichten. Um die Energieeinsparung wesentlich zu verbessern, wird vorgeschlagen, dass die Dichtungsvorrichtung (22) eine längliche elastisch komprimierbare Kissenstruktur (26) mit einem Balg (30) und einer, beispielsweise einen in dem Balg (30) angeordneten elastisch verformbaren Körper (32) aufweisenden, Aufspanneinrichtung (31) zum Aufspannen des Balgs (30) sowie eine Saugeinrichtung (34) aufweist, die dazu ausgebildet ist, durch Absaugen von Fluid aus dem Balg (30) die Kissenstruktur (26) zu komprimieren.

### Bezugszeichenliste:

- 10: Vorschubladebrücke
- 12: Verladestelle
- 14: Gebäude
- 16: Basis
- 18: Plattform
- 20: Vorschublippe
- 22: Dichtungsvorrichtung
- 24: unterer Bereich
- 26: Kissenstruktur
- 28: Halterung
- 30: Balg
- 31: Aufspanneinrichtung
- 32: Körper
- 34: Saugeinrichtung
- 36: Sauggebläse
- 38: Gebläsemotor
- 40: Schlauch
- 42: Ladebrückenantrieb
- 44: Hydraulikzylinder
- 46: Ladebrückenmotor
- 48: Ladebrückensteuerung
- 50: Gehäuse
- 52: Spannungsanschluss
- 54: Isolierpaneel
- 56: Freiraum für LKW-Ladehebebühne
- 58: Transportbehälter
- 60: Ladestellenausrüstung
- 62: Außentor
- 64: Torführung
- 66: Torflügel
- 68: Öffnung
- 70: oberer Öffnungsbereich
- 72: seitliche Begrenzung
- 74: unterer Öffnungsbereich
- 76: Boden
- 78: abgesenkter Bereich
- 80: Anschlag
- 82: Torabdichtung
- 84: Schlitz
- 86: Mittel zum elastischen Aufspannen
- 88: gummielastische Haut
- 90: Elastikkern
- 92: Federelement
- 94: Schraubenfeder
- 96: Blattfeder
- 100: Vorsprung
- 102: Hohlraum
- 103: Fase
- 104: spezielle äußere Form
- 106: Einkerbung
- 110: geschlossenes Fluidvolumen
- 112: Fluidreservoir
- 114: Ballon
- 116: Auslass

## Patentansprüche

1. Vorschubladebrücke (10) für eine Verladestelle (12), umfassend eine Basis (16), eine an der Basis (16) bewegbar gelagerte Plattform (18), eine an der Plattform (18) verschiebbare Vorschublippe (20) und eine Dichtungsvorrichtung (22), die dazu ausgebildet ist, einen unteren Bereich (24) unterhalb der Plattform (18) gegenüber einer Außenumgebung abzudichten, **dadurch gekennzeichnet, dass** die Dichtungsvorrichtung (22) eine längliche elastisch komprimierbare Kissenstruktur (26) mit einem Balg (30) und einer Aufspanneinrichtung (31) zum Aufspannen des Balgs (30) sowie eine Saugeinrichtung (34) aufweist, die dazu ausgebildet ist, durch Absaugen von Fluid aus dem Balg (30) die Kissenstruktur (26) zu komprimieren.

2. Vorschubladebrücke (10) nach Anspruch 1, **dadurch gekennzeichnet,**
**dass** die Aufspanneinrichtung (31) wenigstens eines oder mehrere der folgenden Merkmale umfasst:
2.1 wenigstens einen elastischen Körper (32) oder wenigstens ein elastisches Element (86, 90, 92, 94, 96) in dem Balg (30);
2.2 einen Elastikkern (90) in dem Balg (30);
2.3 eine elastische Ausbildung des Balgs (30); und/oder
2.4 eine gummielastische Haut (88) des Balgs (30), die den Balg (30) in seine aufgespannte Ruhestellung drängt;
2.5 einen elastischen Körper (32), der den Balg (30) vollständig ausfüllt;
2.6 wenigstens einen elastischen Körper (32) oder wenigstens ein elastisches Element (86, 90, 92, 94, 96) in dem Balg (32) sowie wenigstens einen Hohlraum oder ein Formelement, um das Kompressionsverhalten der Kissenstruktur (26), insbesondere eine komprimierte Form der Kissenstruktur (26), zu beeinflussen..

3. Vorschubladebrücke (10) nach einem der voranstehenden Ansprüche,
**dadurch gekennzeichnet,**
**dass** die Dichtungsvorrichtung (22) wenigstens eines oder mehrere der folgenden Merkmale aufweist,
3.1 dass ein in Expansionsrichtung offenes Gehäuse (50) oder eine U-förmige Profilleiste als Halterung (28) vorgesehen ist, in der die Kissenstruktur (26) angeordnet ist, und/oder
3.2 dass der Balg (30) im Wesentlichen gasdicht ausgebildet ist und/oder
3.3 dass der Balg (30) bei inaktiver Saugeinrichtung (34) durch die Aufspanneinrichtung (31) prall gehalten ist; und/oder
3.4 dass die Dichtungsvorrichtung (22) an einer Unterseite der Vorschublippe (20) befestigt ist; und/oder
3.5 dass der Balg (30) und die Saugeinrichtung (34) Teil eines gemeinsamen geschlossenen Fluidvolumens (92) sind; und/oder
3.6 dass die Dichtungsvorrichtung (22) ein Fluidreservoir (94) zur Aufnahme von aus der Kissenstruktur (26) beim Komprimieren gesaugtem Fluid und zur Wiederzuführung des Fluids beim Expandieren der Kissenstruktur (26) in den Balg (30) aufweist.

4. Vorschubladebrücke (10) nach einem der voranstehenden Ansprüche, **gekennzeichnet durch** einen Ladebrückenantrieb (42) zum Antreiben der Bewegungen der Plattform (18) und der Vorschublippe (20) und eine Ladebrückensteuerung (48) zum Steuern des Ladebrückenantriebs (42), wobei die Saugeinrichtung (34) in Abhängigkeit von der Steuerung oder Bewegung des Ladebrückenantriebs (42) gesteuert ist.

5. Vorschubladebrücke (10) nach Anspruch 4, **dadurch gekennzeichnet,**
**dass** die Ladebrückensteuerung (48) dazu ausgebildet ist, die Saugeinrichtung (34) zum Komprimieren der Kissenstruktur
5.2.1 in Abhängigkeit von einer Bewegung der Vorschubladebrücke (10) zu aktivieren und/oder
5.2.2 während jeder Bewegung der Vorschubladebrücke (10) aktiv zu halten und/oder
5.2.3 vor Bewegung der Vorschubladebrücke (10) zu aktivieren und nach Beendigung der Bewegung der Vorschubladebrücke (10) zu deaktivieren.

6. Vorschubladebrücke nach Anspruch 5, **dadurch gekennzeichnet,**
**dass** die Ladebrückensteuerung (48) dazu ausgebildet ist, die Saugeinrichtung (34) zum Komprimieren der Kissenstruktur
6.1 in Abhängigkeit von einer Bewegung der Vorschublippe (20) zu aktivieren und/oder
6.2 während jeder Bewegung der Vorschublippe (20) aktiv zu halten und/oder
6.3 vor Bewegung der Vorschublippe (20) zu aktivieren und nach Beendigung der Bewegung der Vorschublippe (20) zu deaktivieren.

7. Vorschubladebrücke (10) nach einem der Ansprüche 4 bis 6, **dadurch gekennzeichnet**,
7.1 dass die Saugeinrichtung (34) an den Ladebrückenantrieb (42) derart angeschlossen ist, dass die Saugeinrichtung (34) synchron oder zeitversetzt zusammen mit dem Ladebrückenantrieb (42) eingeschaltet und/oder ausgeschaltet wird, und/oder
7.2 dass eine Energieversorgung der Saugeinrichtung (34) mit einer Energieversorgung des Ladebrückenantriebs (42) derart gekoppelt ist, dass die Saugeinrichtung (34) nur dann mit Energie versorgt wird, wenn der Ladebrückenantrieb (42) a) mit Energie versorgt wird oder b) läuft oder c) in Betriebsbereitschaft ist.

8. Ladestellenausrüstung (60) für eine Verladestelle (12) an einem Gebäude (14), umfassend eine Vorschubladebrücke (10) nach einem der voranstehenden Ansprüche und ein wärmegedämmtes Außentor (62) für die Verladestelle (12), wobei das Außentor (62) einen thermisch gedämmten Torflügel (66) und eine Torführung (64) zum Führen des Torflügels (66) aufweist.

9. Ladestellenausrüstung (60) nach Anspruch 8, **dadurch gekennzeichnet, dass** die Torführung (64)
9.1 zur Anordnung vor der im Gebäude (14) im Ruhezustand zurückliegenden Vorschubladebrücke (10) ausgebildet ist oder
9.2 zur Anordnung oberhalb der Vorschubladebrücke (10), so dass der Torflügel (66) im bestimmungsgemäßen Gebrauch im geschlossenen Zustand auf der im Ruhezustand befindlichen Vorschubladebrücke (10) aufliegt, ausgebildet ist.

10. Ladestellenausrüstung (60) nach Anspruch 8 oder Anspruch 9, **gekennzeichnet durch**
10.1 ein Isolierpaneel (54) zur thermischen Isolierung einer Unterseite der Verladestelle (12) und/oder10.2 eine Torabdichtung (82) zum Abdichten eines seitlichen und oberen Freiraums zwischen dem Gebäude (14) und einem an der Verladestelle (12) andockenden Transportbehälter (58).

11. Verladestelle (12) für ein Gebäude (14) oder Gebäude (14) mit einer Verladestelle (12), wobei die Verladestelle (12) eine Vorschubladebrücke (10) nach einem der Ansprüche 1 bis 7 oder eine Verladestellenausrüstung (60) nach einem der Ansprüche 8 bis 10 aufweist.

12. Verladestelle (12) oder Gebäude (14) nach Anspruch 11, mit einem gegenüber einem Boden (76) des Innenraums des Gebäudes (14) abgesenkten Bereich (78), in dem die Vorschubladebrücke (10) angeordnet ist, wobei der Torflügel (66) im geschlossenen Zustand
12.1 vor der im Gebäude (14) zurückversetzten Vorschubladebrücke (10) angeordnet ist oder
12.2 auf der Vorschubladebrücke (10) aufliegt.

13. Verladestelle (12) oder Gebäude (14) nach Anspruch 12, Alternative 12.1, mit einer Verladestellenausrüstung (60) nach Anspruch 10, Alternative 10.1,
**dadurch gekennzeichnet,**
**dass** das Isolierpaneel (54) den abgesenkten Bereich (78) nach unten thermisch isoliert und derart angeordnet und ausgebildet ist, dass der Torflügel (66) im geschlossenen Zustand auf dem Isolierpaneel (54) aufliegt und dass im Ladebetrieb die Kissenstruktur (26) der Dichtungsvorrichtung (22) auf dem Isolierpaneel (54) aufliegt.

14. Verladestelle (12) oder Gebäude (14) nach einem der Ansprüche 11 bis 13, **dadurch gekennzeichnet,**
**dass** die Verladestelle (12) einen oberhalb der Vorschubladebrücke (10) im Ruhezustand angeordneten oberen Öffnungsbereich (70) und einen unteren Öffnungsbereich (74) aufweist, durch den die ausgefahrene Vorschubladebrücke (10) auch in einem abgesenkten Zustand hindurchreichen kann, wobei der untere Öffnungsbereich (70) seitlich durch Anschläge (80) für den andockenden Transportbehälter (58) begrenzt und dadurch enger als der obere Öffnungsbereich (70) ist, wobei die Dichtungsvorrichtung (22) dazu ausgebildet ist, im expandierten Zustand den unteren Öffnungsbereich (74) unterhalb der Vorschubladebrücke (10) zu verschließen.

15. Verwendung einer Dichtungsvorrichtung (20) an einer Vorschubladebrücke (10) für eine Verladestelle (12), die eine Basis (16), eine an der Basis (16) bewegbar gelagerte Plattform (18) und eine an der Plattform (18) verschiebbare Vorschublippe (20) umfasst, zum Abdichten eines unteren Bereichs (24) unterhalb der Plattform (18) gegenüber einer Außenumgebung, **dadurch gekennzeichnet, dass** die Dichtungsvorrichtung (22) eine längliche elastisch komprimierbare Kissenstruktur (26) mit einem Balg (30) und einer Aufspanneinrichtung (31) zum Aufspannen des Balgs (30) sowie eine Saugeinrichtung (34) aufweist, die dazu ausgebildet ist, durch Absaugen von Fluid aus dem Balg (30) die Kissenstruktur (26) zu komprimieren.
